(19) **Europäisches Patentamt**

**European Patent Office**

**Office européen des brevets**

(11) Veröffentlichungsnummer: **0 287 967 B1**

(12) **EUROPÄISCHE PATENTSCHRIFT**

(45) Veröffentlichungstag der Patentschrift: **13.05.92**

(21) Anmeldenummer: **88106035.4**

(22) Anmeldetag: **15.04.88**

(51) Int. Cl.⁵: **A22C 13/00**

(54) **Verpackungshülle, insbesondere Wursthülle, auf Basis von Cellulose mit verbessertem Verarbeitungsverhalten.**

(30) Priorität: **24.04.87 DE 3713712**

(43) Veröffentlichungstag der Anmeldung:
**26.10.88 Patentblatt 88/43**

(45) Bekanntmachung des Hinweises auf die
Patenterteilung:
**13.05.92 Patentblatt 92/20**

(84) Benannte Vertragsstaaten:
**AT BE CH DE FR GB IT LI NL SE**

(56) Entgegenhaltungen:
**EP-A- 0 005 765**
**GB-A- 1 091 105**
**US-A- 3 378 379**

(73) Patentinhaber: **HOECHST AKTIENGESELL-
SCHAFT**
**Postfach 80 03 20**
**W-6230 Frankfurt am Main 80(DE)**

(72) Erfinder: **Hammer, Klaus Dieter, Dr.**
**An der Hasenquelle 25**
**W-6500 Mainz 1(DE)**
Erfinder: **Winter, Hermann**
**Am Schlosspark 93**
**W-6200 Wiesbaden-Biebrich(DE)**
Erfinder: **Krag, Gerhard**
**Lindengarten 16**
**W-6200 Wiesbaden-Erbenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Verpackungshülle von der im Oberbegriff des Anspruchs 1 genannten Art und auf ein Verfahren zu ihrer Herstellung, bei dem ein faseriger Trägerschlauch nach dem Viskoseverfahren zumindest auf seiner Außenseite mit einer Celluloseschicht versehen wird.

Schlauchförmige künstliche Wursthüllen, aufgebaut aus einem Trägerschlauch aus faserverstärkter Cellulose, wobei die Faserverstärkung zumindest auf der einen Oberfläche mit einer Schicht aus regenerierter Cellulose überzogen ist, sind seit langem bekannt. Es wurde auch schon beschrieben, die Haftung von Farbstoffen, fungiciden Salzen und Kunstharzschichten auf der äußeren Celluloseschicht von faserverstärkten Schlauchhüllen durch eine äußere Überzugsschicht oder haftungsvermittelnde Zwischenschicht aus kationischen Harzen zu verbessern (US-Patentschriften 3,695,904; 4,666,750; 4,283,426). Die EP-A-0 005 765 beschreibt schlauchförmige Verpackungshüllen, die optisch wirksame Substanzen enthalten, die jedoch die mechanischen Eigenschaften dieser Hülle nicht verschlechtern. Ein verbessertes Verarbeitungsverhalten, insbesondere die Erhöhung der Oberflächenrauhigkeit der Hüllen durch den Zusatz der Farbstoffe, wird nicht erwähnt.

Es ist ferner Stand der Technik, daß diese Cellulosehüllen im gewässerten Zustand mit dem Füllgut gefüllt werden. Das Wasser dient hierbei als Weichmacher für die Cellulose und verleiht der Hülle die notwendige Geschmeidigkeit und Dehnfähigkeit. Beim Aufschieben dieser weichen und flexiblen Hüllen in Form von einseitig abgebundenen Abschnitten auf das Füllrohr der Füllmaschine bestehen allerdings Schwierigkeiten, diese manuell zu erfassen und festzuhalten.

Es ist somit Aufgabe der Erfindung, diese Verpackungshüllen bezüglich ihres Verarbeitungsverhaltens zu verbessern, wobei die Hülle so zu modifizieren ist, daß sie sich einerseits im nassen Zustand leicht auf das Füllrohr aufschieben läßt, andererseits aber ihr optisches Aussehen, insbesondere ihr Oberflächenglanz, nicht verschlechtert wird.

Diese Aufgabe wird gelöst durch die Verpackungshülle, insbesondere Wursthülle mit den in Anspruch 1 genannten Merkmalen. Die abhängigen Ansprüche geben vorteilhafte Weiterbildungen der Hülle an. Gegenstand der Erfindung ist ferner das Verfahren nach Anspruch 9.

Die Lösung dieser Aufgabe gelingt somit durch die Kombination eines hitzegehärteten Harzes mit Kunststoff-oder Cellulosefasern, insbesondere mit Kunststoff- oder Cellulosepartikeln als die beiden Hauptkomponenten der Oberflächenschicht. Die äußere Oberfläche der Verpackungshülle zeigt eine deutliche Rauhigkeit. Die Hülle besitzt dadurch verbessertes Verarbeitungsverhalten, sie läßt sich insbesondere als Abschnitt im feuchten Zustand problemlos auf das Füllrohr von Füllmaschinen aufbringen. Eine Veränderung des Oberflächenglanzes oder der Transparenz der Hülle ist praktisch nicht feststellbar. Die Schläuche lassen sich auch im flachgelegten Zustand aufwickeln, ohne daß die relativ weiche und kratzempfindliche Celluloseoberfläche beschädigt wird. Die Teilchen bzw. Fasern sind dauerhaft mit der Oberfläche der Hülle verbunden. Die Harzschicht umschließt die Teilchen bzw. Fasern völlig oder zumindest soweit, daß sie fest haften.

Die in der äußeren Harzschicht eingebetteten Partikel oder Fasern bestehen aus Cellulose oder Kunststoff, wobei der Kunststoff nach den folgenden Kriterien auszuwählen ist. Das verwendete Material darf beim abschließenden Trockenprozeß, wenn das Harz in seine wasserunlösliche Form übergeht, nicht zu einem Film verlaufen oder sich im Harz lösen, sondern soll seine teilchenförmige Struktur möglichst beibehalten. Auch sollen die Kunststoff- und Celluloseteilchen möglichst ein spezifisches Gewicht besitzen, welches etwa der Dichte der das kationische Harz enthaltenden Beschichtungsdispersion entspricht, damit sie in dieser Dispersion in der Schwebe bleiben und keine Neigung zum Aufschwimmen oder zum Sedimentieren besitzen.

Besonders geeignet sind Kunststoffpartikel auf Basis von Vinylchlorid-Einheiten enthaltenden Homo- oder Mischpolymerisaten, insbesondere aus Polyvinylchlorid mit einer Teilchengröße von größer als 0,1 µm. Diese relativ groben Teilchen fallen als Nebenprodukt beim Abzentrifugieren von PVC-Dispersionen an, welche für die Papierbeschichtung von Teilchen mit einer Größe von größer als 0,1 µm befreit werden müssen. Damit steht für die Herstellung der erfindungsgemäßen Hülle ein besonders preiswerter Ausgangsstoff zur Verfügung.

Bei Partikeln mit einer Größe von kleiner als 0,2 µm ist der angestrebte Effekt relativ gering, bei Teilchen von größer als 5 µm besteht die Gefahr, daß sie von der Harzschicht nicht ausreichend festgehalten werden. Im allgemeinen sind Partikel mit einem Durchmesser im Bereich von 0,2 bis 2 µm besonders vorteilhaft. Bei Verwendung von Fasern werden Fasern mit relativ kurzer Länge, d.h. kleiner als 10 µm, insbesondere kleiner als 5 µm, bevorzugt. Gewöhnlich werden Fasern mit einer mittleren Länge von 0,1 bis 1 µm verwendet. Bevorzugt wird ein Gewichtsverhältnis von kationischem Harz zu Partikel bzw. Fasern, das im Bereich von 1:5 bis 5:1, insbesondere 1:3 bis 2:1 liegt.

Das kationische Harz ist beispielsweise ein Kondensationsprodukt aus Eiweiß tierischen oder pflanzlichen Ursprungs, wie z.B. Gelatine, Sojaprotein, Erdnußprotein oder Weizenprotein, insbesondere Casein, oder aus einer Phenolverbindung, mit Aldehyd, wie Malonaldehyd oder Glutaraldehyd, insbesondere Formaldehyd oder Glyoxal, wobei der Anteil an Aldehyd 5 bis 15, insbesondere 6 bis 10 Gew.-% beträgt, ein Kondensationsprodukt aus Harnstoff und Formaldehyd (US-A-2,616,874) oder aus Melamin und Formaldehyd (US-A-2,796,362, US-A-2,345,543). Bevorzugt sind Kondensationsprodukte aus einem bifunktionellen Halohydrin, insbesondere Epichlorhydrin und Polyamin, Polyamid, oder Polyaminpolyamid (US-A-2,573,956, US-A-2,926,154, US-A-3,378,379). Für die Umsetzung mit Epichlorhydrin kommen als Polyamine einfache Alkylendiamine in Betracht oder Polyalkylenpolyamine, wie z.B. Diäthylentriamin, Triäthylentetramin, Tetraäthylenpentamin und die entsprechenden Polypropylenund Polybutylen-polyamine.

Die Polyamidpolyamine sind Kondensationsprodukte einer gesättigten, aliphatischen, zweibasischen Säure, die 3 bis 8 Kohlenstoffatome im Molekül aufweist, mit einem der obengenannten Polyamine, welches mindestens eine sekundäre und zwei primäre Aminogruppen aufweist.

Der Überzug auf der Schlauchaußenseite umfaßt insgesamt 40 bis 200, vorzugsweise 60 bis 150 mg an wasserunlöslichem kationischem Harz bezogen auf $m^2$ Trägeroberfläche. Diese Werte wurden auf folgende Weise bestimmt:

Von 500 $cm^2$ der äußeren Oberfläche werden 200 mg Oberflächenmaterial abgeschabt und der Stickstoffgehalt des abgeschabten Materials z.B. verbrennungsanalytisch bestimmt. Zum Vergleich wird die Schlauchaußenseite aus dem gleichen Trägermaterial, allerdings ohne Beschichtung, auf ihren Stickstoffgehalt untersucht. Hierzu wird in analoger Weise von jeweils 500 $cm^2$ innerer Oberfläche 200 mg Oberflächenmaterial abgeschabt und der Stickstoffgehalt in gleicher Weise bestimmt. Bildet man die Differenz der Stickstoffwerte für den beschichteten und den unbeschichteten Schlauch, so erhält man den Stickstoffwert für die Außenbeschichtung und aus diesem Wert den Gehalt an kationischem Harz auf der Außenseite des Schlauchs.

Der äußere Überzug enthält - bedingt durch die Verwendung wäßriger Kunststoffdispersion beim Herstellungsverfahren - chemischen Emulgator in geringen Mengen, so daß die angestrebten Eigenschaften des Überzugs bzw. der Schlauchhülle mit Überzug auf der Außenseite nicht beeinflußt werden.

Die Wursthülle findet vornehmlich Verwendung zur Herstellung von Würsten vom Rohwursttyp, wie z.B. Salami oder Dauerwurst. Sie zeigt dann eine für diese Wurst übliche Innenbeschichtung zur Verbesserung der Haftung zwischen Wurstbrät und Cellulosehülle oder zur Verbesserung der Abschälbarkeit der Hülle vom Wurstbrät.

Die Schlauchhülle zeigt einen üblichen Wassergehalt von z.B. 5 bis 15 Gew.-% oder besitzt einen sehr hohen Wassergehalt von 25 Gew.-% oder mehr, so daß sie vor dem Füllen nicht gewässert werden muß.

Die Herstellung von faserverstärkten Schlauchhüllen auf Basis von Cellulosehydrat ist bekannt und nicht Gegenstand der vorliegenden Erfindung. Sie wird gewöhnlich durch Koagulation der auf die Außenseite einer schlauchförmigen Faserverstärkung aufgebrachten alkalischen Viskoselösung mit saurer Fällflüssigkeit und Regenerierung der Cellulose hergestellt und enthält Weichmacher wie Glycerin. Bevorzugte Schlauchhüllen besitzen einen Wassergehalt von von 5 bis 15 Gew.-% und einen Glyceringehalt von 18 bis 22 Gew.-%, jeweils bezogen auf das Gesamtgewicht der Hülle und ein Flächengewicht von 70 bis 130, insbesondere 80 bis 120 $g/m^2$.

Die Faserverstärkung hat gewöhnlich ein Flächengewicht von 17 bis 28 $g/m^2$ und ist Vorzugsweise eine Papiereinlage oder ein Faservlies aus Hanffasern. Sie wird vorzugsweise nur auf der Außenseite mit Viskose imprägniert und beschichtet. Erfolgt eine zusätzliche Viskosebeschichtung auf der Innenseite des Faserschlauchs, so beträgt der Anteil der Viskose auf der Innenseite am Gesamtauftrag der Viskose maximal 30 Gew.-%. In entsprechender Weise ist die regenerierte Cellulose im Hüllenquerschnitt verteilt, d.h. die Cellulose befindet sich zu 70 bis 100 % auf der Außenseite.

Verfahren zur Außenbeschichtung von Cellulosehydratschläuchen sind ebenfalls beschrieben, beispielsweise in der EP-B-0 037 025 und in der dort zitierten Literatur und als solche nicht Gegenstand der vorliegenden Erfindung. So können zur Herstellung der erfindungsgemäßen Hüllen diese mit einer Dispersion des noch wasserlöslichen kationischen Harzes überzogen werden, wobei die wäßrige Dispersion 0,5 bis 10, vorzugsweise 1 bis 5 Gew.-% an Partikel oder Fasern, insbesondere 2 bis 4 Gew.-% PVC-Partikel und 1 bis 5, vorzugsweise 2 bis 4 Gew.-% vernetzbares kationisches Harz, insbesondere vernetzbares Epichlorhydrin-Polyaminpolyamid-Harzenthält.

Die Erfindung wird durch die nachfolgenden Beispiele näher erläutert. Ausgangsmaterial ist jeweils ein faserverstärkter Schlauch mit einer äußeren Schicht aus Cellulosehydrat-Gel, der hergestellt wurde durch Außenviskosierung eines Faserschlauches, übliche Koagulation und Regenerierung der äußeren Viskoseschicht mit saurer Fäll- und Regenerierflüssigkeit und Waschen mit Wasser. Der erhaltene Schlauch aus faserverstärktem Cellulosehydrat-Gel wird auf seiner Außenseite mit der erfindungsgemäßen Dispersion beschichtet und im aufgeblasenen Zustand in einem Trockentunnel bei 120 bis 150° C getrocknet, wobei das kationische Harz ausgehärtet und in seiner wasserunlöslichen Form zusammen mit den Partikeln an der Celluloseoberfläche fixiert wird. Der Schlauch wird danach auf den gewünschten Feuchtigkeitsgehalt eingestellt.

Der fertiggestellte Schlauch wird als einseitig abgebundener Abschnitt weiterverarbeitet. Die Abbindung besteht aus einer Schnur oder Kordel und gegebenenfalls einem zusätzlichen Metallclip.

Beispiel 1

Die wäßrige Beschichtungsdispersion hat folgende Zusammensetzung:
- 2 Gew.-% eines hitzehärtbaren, noch wasserlöslichen Polymeren aus Äthylendiamin, Diäthylentriamin, Adipinsäure und Epichlorhydrin (® Resamin HW 601, Hersteller Cassella) als kationisches Harz,
- 6 Gew.-% einer 50 gew.-%igen PVC-Dispersion, entspricht 3 Gew.-% PVC-Feststoffgehalt, mit einer Teilchengröße von 0,1 bis 1,6 $\mu$m (® Hostalit E 1069/072, Hersteller Hoechst),
- 10 Gew.-% Glycerin.

Der fertiggestellte Schlauch zeigt auf seiner Außenoberfläche eine Schicht von 80 mg kationisches Harz und 120 mg PVC-Teilchen pro m$^2$ Oberfläche.

Aus dem außenbeschichteten Schlauch (Kaliber 65 mm) werden einseitig abgebundene Abschnitte hergestellt. Sie lassen sich nach dem Wässern problemlos auf das Füllrohr einer Wurstfüllmaschine aufziehen, sie sind in ihren Verarbeitungseigenschaften wesentlich verbessert. Die hergestellte Dauerwurst zeigt trotz der Oberflächenschicht den gewünschten hohen Oberflächenglanz und gute Transparenz.

Beispiel 2

Die wäßrige Beschichtungsdispersion hat die folgende Zusammensetzung:
- 2 Gew.-% kationisches Harz des Beispiels 1,
- 4 Gew.-% der 50 gew.-%igen PVC-Dispersion des Beispiels 1,
- 10 Gew.-% Glycerin.

Der fertiggestellte Schlauch (Kaliber 85 mm) zeigt auf seiner Außenseite eine Schicht aus 65 mg kationisches Harz und 65 mg PVC-Teilchen pro m$^2$ Oberfläche.

Die zu Abschnitten abgebundenen und gewässerten Schlauchstücke lassen sich bei der Herstellung von Würsten vom Salamityp leicht auf das Füllrohr der Füllmaschine aufziehen. Sie zeigen infolge der erhöhten Oberflächenrauhigkeit verbesserte Gebrauchseigenschaften. Die fertiggestellten Würste zeigen den gewünschten, für Wursthüllen aus diesem Material bekannten Oberflächenglanz und gute Transparenz.

**Patentansprüche**

1. Schlauchförmige Verpackungshülle, insbesondere künstliche Wursthülle, aufgebaut aus einem Trägerschlauch aus faserverstärkter Cellulose, wobei die Faserverstärkung zumindest auf der Außenseite vollständig mit einer Celluloseschicht überzogen ist, und einer äußeren Oberflächenschicht auf dieser äußeren Celluloseschicht des Trägerschlauchs, wobei die äußere Oberflächenschicht ein wasserunlösliches kationisches Harz umfaßt, dadurch gekennzeichnet, daß die äußere Oberflächenschicht zusätzlich Partikel oder Fasern aus Kunststoff oder Cellulose enthält.

2. Hülle nach Anspruch 1, dadurch gekennzeichnet, daß die Kunststoffpartikel aus Vinylchloridhomopolymeren oder -mischpolymeren bestehen.

3. Hülle nach Anspruch 1 oder 2, dadurch gekennzeichnet, daß die Partikel eine Teilchengröße von kleiner als 5 $\mu$m, insbesondere im Bereich von 0,2 bis 2 $\mu$m aufweisen.

4. Hülle nach Anspruch 1, dadurch gekennzeichnet, daß die Fasern eine Länge von kleiner als 10, vorzugsweise kleiner als 5 $\mu$m, insbesondere eine mittlere Länge von 0,1 bis 1 $\mu$m aufweisen.

5. Hülle nach einem der Ansprüche 1 bis 4, dadurch gekennzeichnet, daß das kationische Harz eine mit Aldehyd, insbesondere Formaldehyd oder Glyoxal, vernetzte Eiweiß-, Melamin-, Phenol- oder Harnstoffverbindung, vorzugsweise ein mit bifunktionellen Halohydrinen oder deren Derivaten, insbesondere mit Epichlorhydrin, vernetztes aliphatisches Polyamin- oder Polyamidharz, insbesondere Polyaminpolyamid-Harz, ist.

6. Hülle nach einem der Ansprüche 1 bis 5, dadurch gekennzeichnet, daß das Gewichtsverhältnis von kationischem Harz zu Partikel bzw. Fasern im Bereich von 1 : 5 bis 5 : 1, insbesondere 1 : 3 bis 2 : 1, liegt.

7. Hülle nach einem der Ansprüche 1 bis 6, dadurch gekennzeichnet, daß der Gehalt des kationischen Harzes in der Oberflächenschicht einem Flächengewicht von 40 bis 200, insbesondere 60 bis 150 mg/m² entspricht.

8. Hülle nach einem der Ansprüche 1 bis 7, dadurch gekennzeichnet, daß sie bei einem Wassergehalt von 5 bis 15 Gew.-% und einem Glyceringehalt von 18 bis 22 Gew.-%, jeweils bezogen auf das Gesamtgewicht der Hülle, ein Flächengewicht von 70 bis 130, insbesondere 80 bis 120 g/m² besitzt.

9. Verfahren zur Herstellung der Verpackungshülle nach einem der Ansprüche 1 bis 8, bei dem ein schlauchförmiger Faserstoff zumindest auf der Außenseite mit Viskose imprägniert und beschichtet und die Viskose gefällt wird, der entstandene Schlauch aus faserverstärktem Cellulosehydrat-Gel auf seiner Außenseite mit einer wäßrigen Dispersion des noch wasserlöslichen kationischen Harzes überzogen wird und der Schlauch abschließend bei erhöhter Temperatur getrocknet wird, wobei das kationische Harz vernetzt und in seine wasserunlösliche Form überführt wird, dadurch gekennzeichnet, daß die wäßrige Dispersion 0,5 bis 10, vorzugsweise 1 bis 5 Gew.-% an Partikel oder Fasern, insbesondere 2 bis 4 Gew.-% PVC-Partikel und 1 bis 5, vorzugsweise 2 bis 4 Gew.-% vernetzbares kationisches Harz, insbesondere vernetzbares Epichlorhydrin-Polyaminpolyamid-Harz, enthält.

**Claims**

1. A tubular packaging casing, particularly synthetic sausage casing, comprised of a base tube of fiber-reinforced cellulose, said fiber reinforcement being completely coated with a cellulose layer at least on its outside, and of an outer surface layer on this outer cellulose layer of said base tube, said outer surface layer comprising a water-insoluble cationic resin, characterized in that said outer surface layer additionally contains particles or fibers of plastic or cellulose.

2. The casing as claimed in claim 1, characterized in that the plastic particles consist of vinyl chloride homopolymers or vinyl chloride copolymers.

3. The casing as claimed in claim 1 or 2, characterized in that the particles possess a particle size of less than 5 $\mu$m, in particular in the range from 0.2 to 2 $\mu$m.

4. The casing as claimed in claim 1, characterized in that the fibers possess a length of less than 10 $\mu$m, preferably less than 5 $\mu$m, in particular an average length of 0.1 to 1 $\mu$m.

5. The casing as claimed in any one of claims 1 to 4, characterized in that the cationic resin is a protein, melamine, phenol or urea compound crosslinked with an aldehyde, in particular formaldehyde or glyoxal, and preferably is a polyamine resin or polyamide resin, in particular a polyamine-polyamide resin, crosslinked with bifunctional halohydrins or derivatives thereof, in particular with epichlorohydrin.

6. The casing as claimed in any one of claims 1 to 5, characterized in that the weight ratio of cationic resin to particles or fibers is in the range from 1:5 to 5:1, in particular 1:3 to 2:1.

7. The casing as claimed in any one of claims 1 to 6, characterized in that the content of the cationic resin in the surface layer corresponds to a weight per unit area of 40 to 200, in particular 60 to 150, mg/m².

8. The casing as claimed in any one of claims 1 to 7, characterized in that it possesses, at a water content of 5 to 15% by weight and a glycerol content of 18 to 22% by weight based on the total weight of the casing in each case, a weight per unit area of 70 to 130 g/m², in particular 80 to 120, g/m².

9. A process for the production of the packaging casing as claimed in any one of claims 1 to 8, wherein a tubular fibrous substance is impregnated and coated at least on its outside with viscose, the viscose is precipitated, the resulting tube of fiber-reinforced cellulose hydrate gel is coated on its outside with an aqueous dispersion of the still water-soluble cationic resin, and the tube is then dried at elevated temperature, whereby the cationic resin is crosslinked and converted to its water-insoluble form, characterized in that said aqueous dispersion contains 0.5 to 10, preferably 1 to 5, % by weight of particles or fibers, in particular 2 to 4% by weight of PVC particles and 1 to 5, preferably 2 to 4, % by weight of crosslinkable cationic resin, in particular crosslinkable epichlorohydrin/polyamine-polyamide resin.

**Revendications**

1. Enveloppe d'emballage tubulaire, en particulier enveloppe artificielle pour saucisses, constituée d'un tube souple support en cellulose renforcée par des fibres, l'armature fibreuse étant complètement recouverte, au moins sur sa face externe, d'une couche de cellulose, et d'une couche superficielle externe déposée sur cette couche externe de cellulose du tube support, la couche superficielle externe comprenant une résine cationique insoluble dans l'eau, caractérisée en ce que la couche superficielle externe contient en outre des particules ou des fibres en matière plastique ou en cellulose.

2. Enveloppe selon la revendication 1, caractérisée en ce que les particules de matière plastique se composent d'homopolymères ou de copolymères de chlorure de vinyle.

3. Enveloppe selon la revendication 1 ou 2, caractérisée en ce que les particules ont une taille inférieure à 5 $\mu$m, en particulier comprise entre 0,2 et 2 $\mu$m.

4. Enveloppe selon la revendication 1, caractérisée en ce que les fibres ont une longueur inférieure à 10 $\mu$m, de préférence inférieure à 5 $\mu$m, en particulier une longueur moyenne de 0,1 à 1 $\mu$m.

5. Enveloppe selon l'une des revendications 1 à 4, caractérisée en ce que la résine cationique est un composé d'albumine, de mélamine, de phénol ou d'urée réticulé avec un aldéhyde, en particulier le formaldéhyde ou le glyoxal, de préférence une résine polyamine ou polyamide aliphatique réticulée avec des halogénhydrines bifonctionnelles ou leurs dérivés, en particulier avec l'épichlorhydrine, en particulier une résine polyaminepolyamide.

6. Enveloppe selon l'une des revendications 1 à 5, caractérisée en ce que le rapport pondéral résine cationique/particules (ou fibres) vaut de 1:5 à 5:1, en particulier de 1:3 à 2:1.

7. Enveloppe selon l'une des revendications 1 à 6, caractérisée en ce que la teneur en résine cationique dans la couche superficielle correspond à un poids surfacique de 40 à 200, en particulier de 60 à 150 mg/m$^2$.

8. Enveloppe selon l'une des revendications 1 à 7, caractérisée en ce que son poids surfacique est de 70 à 130, en particulier de 80 à 120, g/m$^2$, pour une teneur en eau de 5 à 15 % en poids et une teneur en glycérol de 18 à 22 % en poids, chaque fois par rapport au poids total de l'enveloppe.

9. Procédé de fabrication de l'enveloppe d'emballage selon une des revendications 1 à 8, dans lequel on imprègne et enduit de viscose, sur au moins la face externe, une matière fibreuse tubulaire, on précipite la viscose, on recouvre, sur sa surface externe, le tube souple résultant, à base de gel d'hydrate de cellulose renforcé par des fibres, d'une dispersion aqueuse de la résine cationique encore hydrosoluble, et on sèche ensuite le tube souple à température élevée, ce qui réticule la résine cationique et la transforme en sa forme insoluble dans l'eau, caractérisé en ce que la dispersion aqueuse contient 0,5 à 10, de préférence 1 à 5, % en poids de particules ou de fibres, en particulier 2 à 4 % en poids de particules de PCV et 1 à 5, de préférence 2 à 4, % en poids de résine cationique réticulable, en particulier de résine épichlorhydrine-polyaminepolyamide réticulable.